(19)

Europäisches
Patentamt
European
Patent Office
Office européen
des brevets

(11) **EP 2 257 099 A1**

(12) **EUROPEAN PATENT APPLICATION**
published in accordance with Art. 153(4) EPC

(43) Date of publication:
**01.12.2010 Bulletin 2010/48**

(21) Application number: **09726016.0**

(22) Date of filing: **27.03.2009**

(51) Int Cl.:
**H04W 28/04** (2009.01)          **H04L 1/00** (2006.01)
**H04L 1/16** (2006.01)          **H04W 28/18** (2009.01)

(86) International application number:
**PCT/JP2009/056397**

(87) International publication number:
**WO 2009/119856 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008085059**

(71) Applicant: **Kyocera Corporation**
**Kyoto-shi**
**Kyoto 612-8501 (JP)**

(72) Inventor: **SAHARA, Toru**
**Yokohama-shi**
**Kanagawa (JP)**

(74) Representative: **Schwabe - Sandmair - Marx**
**Patentanwälte**
**Stuntzstraße 16**
**81677 München (DE)**

(54) **RADIO COMMUNICATION SYSTEM, RADIO COMMUNICATION DEVICE AND RADIO COMMUNICATION METHOD**

(57)     One of objects or the present invention is to enhance stability of radio communication by switching between ARQ and HARQ according to whether or not signal quality of received data is deteriorated, such that efficiently perform error correction, when an error is detected in the received data. In a radio communication device (e.g., a PHS terminal 110) in a radio communication system 1.00 of the present invention, a retransmission request selection section 342 selects an ARQ processing section 370 when a signal quality determination section 340 determines that a Signal to Interference and Noise Ratio, which serves as measured signal quality, is deteriorated and selects an ARQ processing section 350 when the signal quality determination section 340 has determined that the measured Signal to Interference and Noise Ratio is not deteriorated.

FIG. 7

## Description

TECHNICAL FIELD

The present invention relates to a radio communication system, a radio communication device, and a radio communication method for effecting radio communication.

BACKGROUND ART

Recently, mobile stations typified by a Personal Handy phone System (PHS) and portable phones, etc., have become widely used, and it has become able to make communications and acquire information anytime and anywhere. In particular, in those days, a volume of available information continues to increase, and high speed and high quality radio communication schemes have come to be adopted in order to download a large volume of data.

For instance, there are Association of Radio Industries and Businesses (ARIB) STD T95 or a PHS Memorandum of Understanding (MoU) as standards for next generation PHS communication that enable the high speed digital communication. These communications is adopted an Orthogonal Frequency Division Multiplexing (OFDM) scheme. The OFDM is a scheme that is classified into one of multiplexing schemes, and that utilizes a plurality of carrier waves along a unit time axis, and that effectively utilizes a frequency band by making a partial overlap between bands of carrier waves such that a phase of a signal wave to be modulated becomes orthogonal between adjacent carrier waves.

In the OFDM, a sub-channel is allocated on a per-user basis of time divisions. On the contrary, there has also been provided an OFDMA Orthogonal Frequency Division Multiplexing Access (OFDMA) scheme that a plurality of users share all sub-channels, and that allocates a sub-channel showing the highest transmission efficiency to an individual user.

Under the ARIB STD T95 or the PHS MoU, a modulation scheme determined by adaptive modulation and a coding scheme (Modulation and Coding Scheme, hereinafter called simply as "MCS") are transmitted to a transmitter by way of an anchor channel in an Fast access channel based on Map-Mode (FM-mode) (for instance, see Non-Patent Document 1). With modulating the data based on the MCS, the transmitter performs communication using an optimum OCS in a communication environment at the time.

The adaptive modulation estimates a communication environment between a transmitter and a receiver based on signal quality, such as a signal-to-noise ratio (SNR) of an uplink communication signal transmitted from a mobile station to a base station, a signal-to-interference-and-noise ratio which is hereinafter abbreviated as "SINR"), and a bit error rate. In a superior communication environment, an MCS showing further enhanced modulation efficiency is selected. In a poor communication environment, an MCS showing low modulation efficiency is selected. Accordingly, an implementation of stable radio communication is possible.

Further, under the ARIB STD T95 or the PHS MoU , when the receiver has received wrong data an automatic retransmission request (Automatic Repeat reQuest hereinafter simply abbreviated as "ARQ") for requesting retransmission of data is transmitted to a transmitter that has sent the wrong data. Since the transmitter performs data retransmission processing at a MAC layer (a lower layer) in response to the ARQ, it is efficiently possible to make compensation for the error within a short period of control time (Non-Patent Document 2). Meanwhile, in the ARIB STD T95 and the PHS MoU, HARQ (Hybrid ARQ) technique, which is further enhanced the efficiency of packet error correction by combination of the ARQ with forward error correction (FFC), is also adopted

> Non-Patent Document 1: ARIB (Association of Radio Industries and Businesses) STD-T95
> Non-Patent Document 2: A-GN 4.00-01-TS Rev. 3 "Next Generation PHS Specifications," pp. 331 through 340.

DISCLOSURE OF THE INVENTION

PROBLEM THAT THE INVENTION IS TO SOLVE

According to the ARIB STD T95 or the PHS MoU, data to be transmitted and received are divided on a unit frame. The MCS can be also set for each minimum unit of data for a transmission frame (Physical Resource Unit, hereinafter called simply as "PRU"). However, a volume of information required for the MCS becomes enormous, and a data area is wastefully occupied. Consequently, considering data of one frame are transmitted substantially at the same time, an MCS has be designated for all frames only once in the standard.

However, in the above-mentioned HARQ, the MCS of data to be retransmitted have to be equal to the MCS of the previously-transmitted data. Further, only one type of MCS may be designated for one frame. Accordingly, all data in the frame including the retransmission data are fixed to the MCS of retransmission data regardless of a radio wave environment at the time.

Therefore, when the radio wave environment is deteriorated, retransmission data are continually transmitted by the MCS showing high modulation efficiency. Even when a retransmission request is repeated by use of the HARQ technique, it is impossible to perform error correction because of an excessively high communication rate.

Considering such a problem, when an error is detected in the received data, the present invention is possible to perform efficiently error correction by switching between the ARQ and the HARQ according to whether or not signal quality of the received data is deteriorated. The invention intended to provide a radio communication system, a radio communication device, and a radio communication method, which are able to enhance stability of radio communication.

MEANS FOR SOLVING THE PROBLEM

In order to solve the problem, a typical configuration of a radio communication system of the present invention including: a first radio communication device, and a second radio communication device that establishes radio communication with the first radio communication device, wherein the second radio communication device includes: a transmission data holding section that holds a data of unit frame; a data transmission section that sequentially transmits the data; a retransmission request receiving section that receives an HARQ retransmission request or an ARQ retransmission request transmitted from the first radio communication device; an HARQ data retransmission section that retransmits data, which are responsive to the HARQ retransmission request, and which are held in the transmission data holding section, when the retransmission request receiving section has received the HARQ retransmission request; and an ARQ data retransmission section that retransmits data, which are responsive to the ARQ retransmission request, and which are held in the transmission data holding section, when the retransmission request receiving section has received the ARQ retransmission request, wherein the first radio communication device includes: a data receiving section that receives data transmitted from the second radio communication device; a signal quality measurement section that measures signal quality of the received data; a signal quality determination section that determine whether or not the measured signal quality is deteriorated; a data demodulation section that demodulate the received data; an error detection section that detects whether or not an error exists in the demodulated data; an HARQ processing section capable of performing an HARQ retransmission request; an ARQ processing section capable of performing an ARQ retransmission request; and a retransmission request selection section that selects either the HARQ processing section or the ARQ processing section and that causes the selected processing section to make the HARQ retransmission request or the ARQ retransmission request when the error detection section has detected an error, and wherein the retransmission request selection section selects the ARQ processing section when the signal quality determination section determines that the measured signal quality is deteriorated and selects the HARQ processing section when the signal quality determination section has determined that the measured signal quality is not deteriorated.

According to the configuration, when a measured signal quality has become deteriorated, that is, when a radio wave environment has become worse, the retransmission request selection section select the ARQ processing section. Accordingly, when a correction of the error may not be expected by performing of the HARQ retransmission request due to a worsening of the radio wave environment, the ARQ retransmission request is performed. Therefore, the error correction can quickly be performed with reliability.

The signal quality measurement section measures signal quality of one PRU arbitrarily selected from currently used PRUs, and, when the measured signal quality falls below a predetermined value, the signal quality determination section may determines that signal quality is deteriorated.

According to the MoU standard, the communication is performed by using of a plurality of PRUs in one frame. Therefore, the deterioration of signal quality is determined by whether or not signal quality of one PRU selected arbitrarily from currently using PRUs falls below a predetermined value, so that deterioration of signal quality can be determined without a previous value. Further, calculation load becomes smaller, and an enhancement in processing speed may be expected.

The predetermined value may be a required signal quality of the MCS determined from an MCS, the maximum repeat permissible number of an HARQ retransmission request, antenna specifications, a predicted propagation channel, an algorithm, and others. The predetermined value may be also an amount of change in signal quality per unit time. Accordingly, it is possible to determine the sharp deterioration of the radio wave environment.

The signal quality measurement section measures signal qualities of currently used PRUs, and, when a value determined by averaging the measured signal qualities in a frame falls below a predetermined value, the signal quality determination section may determine that the signal quality is deteriorated.

According to the MoU standard, the communication is carried out by using of a plurality of PRUs in one frame. By making a determination using a value determined by averaging signal qualities in currently using PRUs included in a frame rather than by determining whether or not signal quality falls below the predetermined value through use of signal quality of one PRU, it becomes possible to more accurately determine deterioration of signal quality

The signal quality measurement section measures signal qualities of currently used PRUs, and, when a value determine by smoothing the measured signal qualities among the frames falls below a predetermined value, the signal quality determination section may determine that the signal quality is deteriorated.

Accordingly, by making a determination using signal quality determined by smoothing signal qualities among frames, it is possible to determine deterioration of signal quality more accurately. Here, the smoothing among frames means smoothing such as moving average and a value determined by exponential smoothing among frames.

When the retransmission request selection section has selected the ARQ processing section, the ARQ processing section may perform an ARQ retransmission request by an MCS showing modulation efficiency which is lower than an MCS showed by the received data.

When the retransmission request selection section has selected the ARQ processing section, that is, when signal quality has become deteriorated, required signal quality may be reduced by reducing modulation efficiency, so that data may be retransmitted with reliability.

The HARQ processing section may includes: an operation mode setting section, which sets an operation mode of the HARQ processing section to "in the HARQ process" or "discarded the HARQ" according to that which one of the HARQ processing section and the ARQ processing section is selected by the retransmission request selection section and notifies the ARQ processing section; and an HARQ transmission section that transmits the HARQ retransmission request to the second radio communication device when the set operation mode is "in the HARQ process", and the ARQ processing section may includes: an operation mode holding section that holds the notified operation mode; and an ARQ transmission section that transmits the ARQ retransmission request to the second radio communication device when the held operation mode is other than the "in the HARQ process".

When the HARQ processing section is selected, the ARQ processing section is notified of the operation mode showing selection of the HARQ processing section. By the configuration, the ARQ processing section may confirm that the HARQ processing section is selected certainly. Further, when the held operation mode is other than "in the HARQ process", the ARQ transmission section transmits the ARQ retransmission request to the second radio communication device. Therefore, when the HARQ processing section is selected, that is, when the held operation mode is "in the HARQ process," the ARQ retransmission request is not transmitted to the second radio communication device, so that an overlap of the retransmission request is prevented.

On the contrary, when the ARQ processing section is selected, that is, when the operation mode setting section sets the operation mode of the HARQ processing section to "discarded the HARQ," the HARQ transmission section does not transmit any HARQ retransmission request to the second radio communication device. By the configuration, the HARQ processing section has not detected any error in the second radio communication device, that is, the second radio communication device recognize as being normal. Therefore, since only the retransmission request is transmitted from the ARQ processing section, the second radio communication device is able to retransmit only data responsive to the ARQ retransmission request.

In order to solve the problem, a typical configuration of a radio communication device of the present invention comprising: a data receiving section that receives data of unit frame, transmitted from the other radio communication device; a signal quality measurement section that measures signal quality of the received data; a signal quality determination section that determines whether or not signal quality of the measured data is deteriorated; a data demodulation section that demodulates the received data; an error detection section that detecting whether or not an error exists in the demodulated data; an HARQ processing section capable of performing an HARQ retransmission request; an ARQ processing section capable of performing an ARQ retransmission request; and a retransmission request selection section that selects either the HARQ processing section or the ARQ processing section and that causes the selected processing section to make the HARQ retransmission request or the ARQ retransmission request when the error detection section has detected an error, wherein the retransmission request selection section selects the ARQ processing section when the signal quality determination section has determined that the measured signal quality is deteriorated and selects the HARQ processing section when the signal quality determination section has determined that the measured signal quality is not deteriorated.

In order to solve the problem a typical configuration of a radio communication method of the present invention comprising: in the second radio communication device, holding data of unit frame; and transmitting sequentially the data; in the first radio communication device, receiving the transmitted data; measuring signal quality of the received data; demodulating the received data; detecting whether or not an error exists in the demodulated data; determining whether or not the measured signal quality is deteriorated when an error is detected in the demodulated data; performing an ARQ retransmission request when the measured signal quality is determined to be deteriorated; and performing an HARQ retransmission request when the measured signal quality is determined not to be deteriorated; and in the second radio communication device, receiving the HARQ retransmission request or the ARQ retransmission request, retransmitting the data that are responsive to the HARQ retransmission request and that are held when received the HARQ retransmission request, and retransmitting the data that are responsive to the ARQ retransmission request and that are held when received the ARQ retransmission request

A typical example of the first radio communication device is a mobile communication terminal, and a typical example of the second radio communication device is a base station. However, the present invention is not confined to the examples.

Elements corresponding to the technical idea of the above-described radio communication system and their explanations may also be applied to the radio communication device and the radio communication method.

Advantage of the Invention

As described above, the radio communication system of the present invention, when detected an error in received data, it becomes possible to perform efficient error correction by switching between ARQ technique and HARQ technique according to whether or not signal quality of the received data is deteriorated, and it is possible to enhance stability of radio communication.

BRIEF DESCRIPTION OF THE DRAWINGS

[Fig. 1] It is a descriptive view showing a general connection relationship of a radio communication system.
[Fig. 2] It is a block diagram showing a general configuration of a base station.
[Fig. 3] It is a descriptive view for describing a frame of the present embodiment.
[Fig. 4] It is a functional block diagram showing a hardware configuration of a PHS terminal.
[Fig. 5] It is a perspective view showing an appearance of a PHS terminal.
[Fig. 6] It is a descriptive view for describing an operation of chase combining.
[Fig. 7] It is a flowchart showing flow of processing of a radio communication method of the present embodiment.

DESCRIPTIONS OF THE REFERENCE NUMERALS AND SYMBOLS

100 ... radio communication system, 110 ... PHS terminal, 120 ... base station, 130 ... communication network, 140 ... relay server, 210 ... base station control section, 212 ... base station memory, 214 ... base station radio communication section, 216 ... base station wired communication section, 230 ... transmission data holding section, 232 ... data modulation section, 234 ... data transmission section, 236 ... retransmission request receiving section, 238 ... HARQ data retransmission section, 240 ... ARQ data retransmission section, 310 ... terminal control section, 312 ... terminal memory, 314 ... display section, 316 ... operation section, 318 ... voice input section, 320 ... voice output section, 322 ... terminal radio communication section, 330 ... data receiving section, 332 ... data demodulation section, 334 ... signal quality measurement section, 336 ... error correction section, 338 ... error detection section, 340 ... signal quality determination section, 342 ... retransmission request selection section, 350 ... HARQ processing section, 352 ... data storage section, 354 ... operation mode setting section, 356 ... ARQ transmission section, 358 ... PHY payload transmission section, 360 ... data combining section, 362 ... data deletion section, 370 ... ARQ processing section, 372 ... PHY payload receiving section, 374 ... sequence number storage section, 376 ... operation mode holding section, 378 ... ARQ transmission section

BEST MODE FOR IMPLEMENTING THE INVENTION

A preferred embodiment of the present invention is described below in detail by reference to the accompanying drawings. Dimensions, materials, and other specific numerals provided in the embodiment are mere exemplifications to facilitate an understanding of the invention and do not impose any limitations on the present invention, except where specifically notified. Meanwhile, in the specification and the drawings, elements having substantially the same functions and configurations are assigned the same reference numerals, and the repetitions of explanations are omitted. Moreover, illustrations of elements that do not have any direct relationship with the present invention are omitted.

Mobile stations (referred to also as "mobile communication terminals") typified by PHS terminals and portable phones configure a radio communication system that performs radio communication with base stations that are fixedly provided at predetermined intervals. All of the base stations and the mobile stations in the radio communication system act as radio communication devices that transmit and receive data. In the present embodiment, in order to facilitate understanding, it is explained with the assumption that the base station is taken as another radio communication device and that the mobile station is taken as a radio communication device of interest. However, a converse configuration also stands obviously. Here, the entire radio communication system is explained at first, and it is subsequently explained that a specific configuration of a PHS terminal which serves as both a base station and a mobile station. Further, in the present embodiment, although the PHS terminal is taken as a mobile station, it is not limited to the PHS terminal, and various electronic devices capable of effecting radio communication, such as portable phones, notebook personal computers, PDAs (Personal Digital Assistants), digital cameras, music players, car navigation systems, portable TVs, game machines, DVD players, and remote controllers, may also be used as mobile stations.

(embodiment Radio communication system 100)

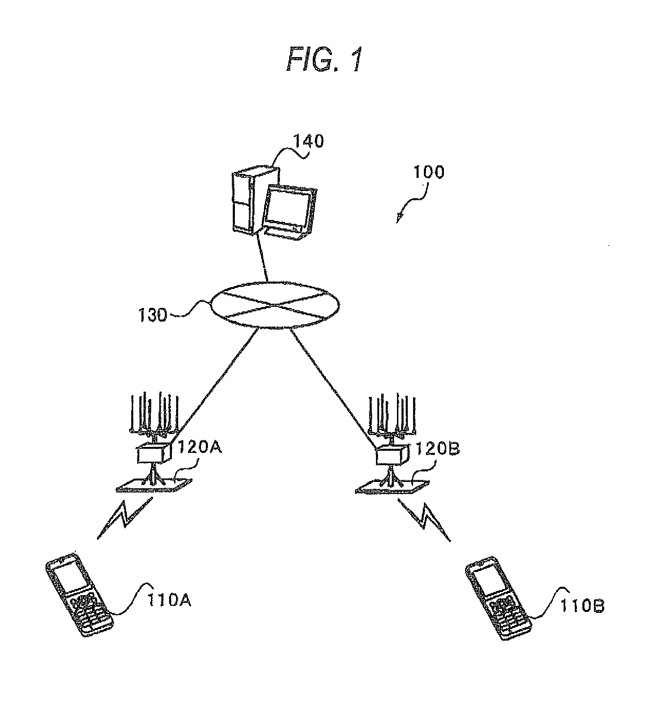

Fig. 1 is a descriptive view showing a general connection relationship of a radio communication system 100. The radio communication system 100 includes: a PHS terminal 110 (110A, 110B); a base station 120 (120A, 120B); a communication network 130 including an ISDN (Integrated Services Digital Network) line, the Internet and a private line, etc.; and a relay server 140.

In the radio communication system 100, when a user makes a connection of a communication line from the own PHS terminal 110A to another PHS terminal 110B, the PHS terminal 110A makes a request to the base station 120A in a communication available range for a radio connection. The base station 120A received the radio connection request makes a request to the relay server 140 for a connection to the intended party via the communication network 130. The relay server 140 selects, for example, the base station 120B located in a radio communication range of the other PHS terminal 110B, and establishes a communication channel between the base station 120A and the base station 120B. Thus, the base station 120A establishes communication with the PHS terminal 110A and the PHS terminal 110B.

In such a radio communication system 100, various techniques for increasing a speed and quality of communication between the PHS terminal 110 and the base station 120 is adopted. In the embodiment, next generation PHS communication techniques, such as the ARIB STD T95 and PHS MoU, are adopted. Radio communication based on a TDD (Time Division Duplex)/ OFDMA (or TDD/OFDM) scheme is performed between the PHS terminal 110 and the base station 120.

In the embodiment, the ARQ and the HARQ are used in the radio communication system 100. When an error is detected in data that have been transmitted from the base station 120 and received by the PHS terminal 110, the PHS terminal 100 measures a Signal to Interference and Noise Ratio (SINR) as signal quality. The radio communication system 100 intend to perform the efficient error correction and enhance stability of radio communication by the PHS terminal 110 performing a retransmission request, based on that whether or not deterioration has occurred in SINR, to the base station 120 by use of either the ARQ technique or the HARQ technique. Although the SINR is used as signal quality in the embodiment, the signal quality is not limited to the SINR. A Signal to Noise Ratio, a bit error rate, a frame error rate, and others, may also be preferably used.

Specific configurations of the base station 120 and the PHS terminal 110 in such a radio communication system 100 will be described.

(Base station 120)

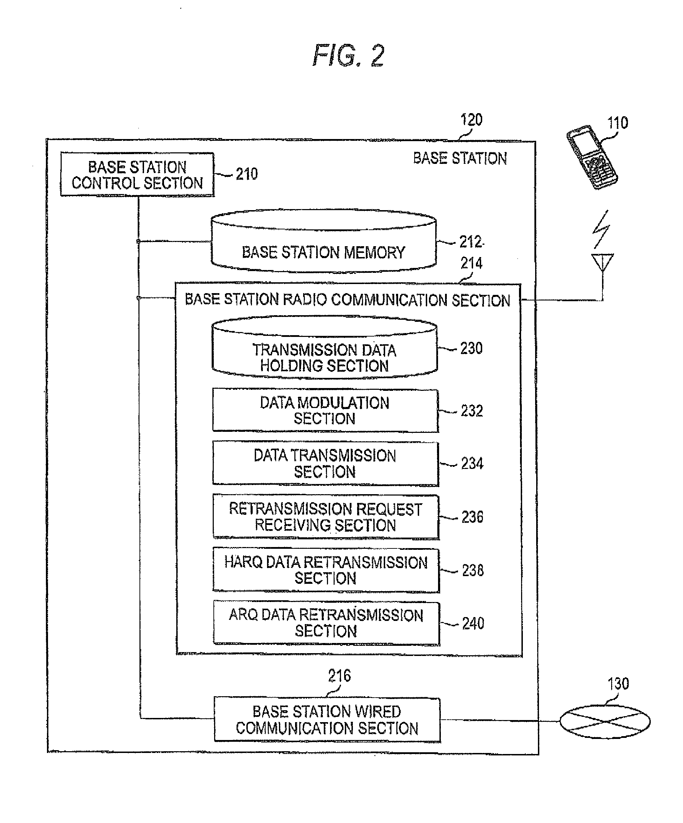

Fig. 2 is a block diagram showing a general configuration of the base station 120. The base station 120 includes a base station control section 210, base station memory 212, a base station radio communication section 214, and a base station wired communication section 216 and is configured.

The base station control section 210 manages and controls the entire base station 120 by a semiconductor integrated circuit including a central processing unit (CPU). Further, the base station control section 210 also controls a communication connection to the communication network 130 of the PHS terminal 110 and the other PHS terminal 110 by use of a program of the base station memory 212.

The base station memory 212 is made up of ROM, RAM, EEPROM, nonvolatile RAM, flash memory, an HDD (Hard Disk Drive), or the like, and stores a program and time information, etc., processed by the base station control section 210.

The base station radio communication section 214 establishes communication with the PHS terminal 110 and performs transmission and receipt of data.

The base station wired communication section 216 can make a connection to various servers including the relay server 140 via the communication network 130.

In addition, in the embodiment, the base station radio communication section 214 functions also as a transmission data holding section 230, a data modulation section 232, a data transmission section 234, a retransmission request receiving section 236, an HARQ data retransmission section 238, and an ARQ data retransmission section 240.

The transmission data holding section 230 holds in relation between both data of unit frame of transmission object added a Cyclic Redundancy Check bit (CRC) and an MCS identifier for identifying an MCS for modulating and both a frame identifier and a sequence number that enable identification of a frame of the data. In the present embodiment, the identifier refers to an indication capable of specific identifying by a numeral, an alphabet, or a symbol.

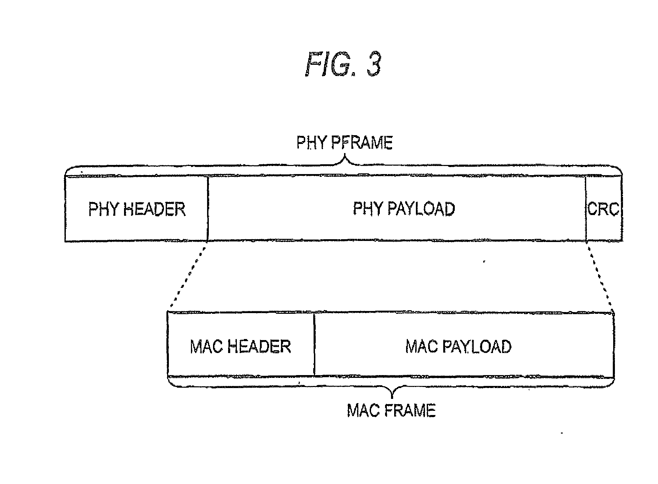

Fig. 3 is a descriptive view for describing the frame in the present embodiment. As shown in Fig. 3, the frame in the present embodiment is a PHY frame that includes a PHY header, a PHY payload, and the CRC. The PHY header includes the MCS identifier and the frame identifier, and the PHY payload includes an MAC frame. The MAC frame includes an MAC payload including an MAC header and data. The frame identifier is included in the PHY header and may be referred in a PHY layer. In the meantime, a sequence number is a number showing a sequence of data and is included in the MAC header of the MAC frame. Consequently, it can not be referenced in the PHY layer.

The data modulation section 232 modulates a frame including the data held in the transmission data holding section 230, the MCS identifier, the frame identifier, and the sequence number based on to the held MCS; and generates a baseband signal. Here, the MCS is equal to the MCS requested by the PHS terminal 110 or is to be inferior in terms of modulation efficiency.

When received the HARQ retransmission request from the PHS terminal 110, the data modulation section 232 modulates an error part (retransmission data) in data held in the transmission data holding section 230 identified by the frame identifier and an error part identifier that are objects of the HARQ retransmission request, based on the held MCS. Further, when the data modulation section 232 is received the ARQ retransmission request from the PHS terminal 110, the data modulation section 232 modulates the data (retransmission data) held in the transmission data holding section 230 identified by a sequence number that is an object of the ARQ retransmission request, according to the held MCS.

The data transmission section 234 sequentially transmits the frames including the data modulated by the data modulation section 232.

When the retransmission request receiving section 236 received the HARQ retransmission request (NACK) from the PHS terminal 110, the retransmission request receiving section 236 extracts the frame identifier and the error part identifier from the data occurred error included in the anchor channel (ANCH) and identifies the data and the error. Meanwhile, when there is the ARQ retransmission request (SREJ) from the PHS terminal 110, the retransmission request receiving section 236 extracts a sequence number included in a Circuit Switching Channel (CSCH) data channel (CDCH), and identifies the data.

In addition, When the retransmission request receiving section 236 received an ACK transmitted from the PHS terminal 110, the retransmission request receiving section 236 deletes the data corresponding to the frame identifier or the sequence number included in the ACK from the transmission data holding section 230.

When the retransmission request receiving section 236 received the HARQ retransmission request, the HARQ data retransmission section 238 retransmits the frame, which is identified by the frame identifier included in the HARQ retransmission request, and which includes the data held in the transmission data holding section 230, at predetermined frame timing determined by the radio communication system 100.

When the retransmission request receiving section 236 has received the ARQ retransmission request (SREJ), the ARQ data retransmission section 240 retransmits the frame, which is identified by a sequence number included in the ARQ retransmission request (SREJ), and which includes the data held in the transmission data holding section 230 at predetermined frame timing determined by the radio communication system 100.

(PHS terminal 110)

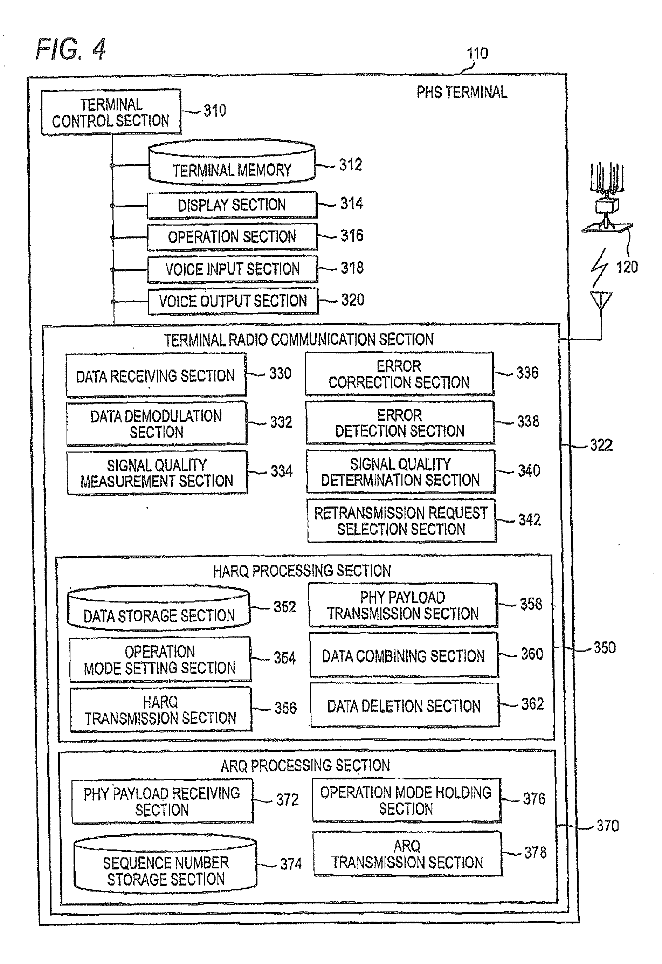

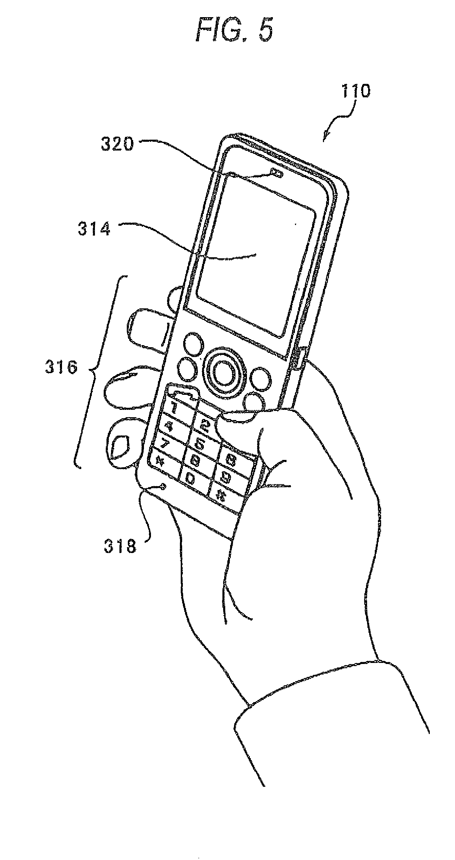

Fig. 4 is a functional block diagram showing a hardware configuration of the PHS terminal 110. Fig. 5 is an oblique perspective view showing the appearance of the PHS terminal 110. The PHS terminal 110 includes a terminal control section 310, terminal memory 312, a display section 314, an operation section 316, a voice input section 318, a voice output section 320, and a terminal radio communication section 322.

The terminal control section 310 manages and controls the entire PHS terminal 110 by a semiconductor integrated circuit including a central processing unit (CPU). Further, the terminal control section 310 also implements a call function, a mail transmission/receipt function, an imaging function, a music playback function, and a TV watch function by use of a program in the terminal memory 312.

The terminal memory 312 is made up of ROM, RAM, EEPROM, nonvolatile RAM, flash memory or an HDD, etc., and stores a program and audio data, etc., which are processed by the terminal control section 310.

The display section 314 is made up of a liquid crystal display or an Electro Luminescence (EL), etc., and can display a Web browser and a Graphical User Interface (GUI) of an application, which are stored in the terminal memory 312 or provided by an application relay service (not shown) via the communication network 130.

The operation section 316 is made up of switches, such as a keyboard, an arrow key, and a joystick, and receives a user's operation input.

The voice input section 318 is made up of voice recognition means, such as a microphone, and converts a inputted use's voice during a call into an electric signal which can be processed in the PHS terminal 110.

The voice output section 320 is made up of a speaker and converts a voice signal from the intended party received by the PHS terminal 110 into a voice, and outputs the voice. The voice output section may also output a ring tone, operating sound of the operation section 316, and alarm sound, etc.

The terminal radio communication section 322 establishes radio communication with the base station 120 in the communication network 130 and exchanges data. In establishment of communication, the terminal radio communication section 322 transmits a Timing Control Channel (TCCH) including a sync signal to the base station 120. The base station 120 is sampling sync symbol from the TCCH, recognizes transmission timing of the PHS terminal 110, and returns that difference to the PHS terminal 110 by use of a Signaling Control Channel (SCCH).

And, in the embodiment, the terminal radio communication section 322 acts also as a data receiving section 330, a data demodulation section 332, a signal quality measurement section 334, an error correction section 336, an error detection section 338, a signal quality determination section 340, a retransmission request selection section 342, an HARQ processing section 350, and an ARQ processing section 370.

The data receiving section 330 receives data and a frame (see Fig. 3), which includes a frame identifier and a sequence number, transmitted from the base station 120.

The data demodulation section 332 demodulates the frame received by the data receiving section 330 and transmits the frame to the error correction section 336. When the data receiving section 330 received a frame including retransmission data at predetermined frame timing after the PHS terminal 110 had made an HARQ retransmission request or an ARQ retransmission request, the data demodulation section 332 demodulates retransmission data of the received frame and transfers to an HARQ processing section 350 to be described later.

The signal quality measurement section 334 measures an SINR of one PRU arbitrarily selected from currently using PRUs that make up of the data received by the data receiving section 330.

The error correction section 336 makes a correction to an error of data transferred from the data demodulation section 332 or a data combining section 360 by a cyclic redundancy check (CRC) bit.

The error detection section 338 detects an error that can not have been corrected even by the error correction section 336.

The signal quality determination section 340 determines whether or not deterioration exists in SINR of the PRU measured by the signal quality measurement section 334. In the embodiment, when the SINR measured by the signal quality measurement section 334 falls below a predetermined value, the signal quality determination section 340 determines that the SINR is deteriorated.

Here, the predetermined value is a required SINR for the MCS that is determined from an MCS, the maximum permissible number of times that an HARQ retransmission request is repeated, antenna specification, a predicted propagation channel, an algorithm, and others. The predetermined value may be an amount of change in SINR per unit time. By taking the predetermined value as the amount of change in SINR per unit time, it is possible to determine sharp deterioration of the radio wave environment.

Meanwhile, the MCS used on the determination of a predetermined value may be identified by an MCS identifier transmitted from the base station 120.

In the embodiment, when the SINR of arbitrarily selected one PRU measured by the signal quality measurement section 334 falls below the predetermined value, the signal quality determination section 340 determines that the SINR is deteriorated. The signal quality determination section 340 may determine that the SINR is deteriorated when a value determined by averaging SINRs of the currently using PRUs composed of the measured data within the frame or a value determined by smoothing SINRs of the currently using PRUs composed of measured data among frames falls below the predetermined value.

According to the MoU standard, communication is performed by utilization of a plurality of PRUs in one frame. Consequently, it becomes possible to more accurately determine deterioration of the SINR by making a determination by use of a value determined by averaging SINRs of PRUs included in a frame rather than by determining whether or not an SINR of one PRU falls below the predetermined value.

Further, it is also possible to accurately determine deterioration of an SINR by making a determination by use of an SINR determined by smoothing SINRs among frames. Smoothing SINRs among frames may is smoothing operation like moving average. A smoothed value is a value determined by subjecting SINRs to exponential smoothing among frames and is derived from Equation (1) provided below.

$$A_n = \alpha A_{(n-1)} + (1-\alpha)B_n \ldots \text{Equation (1)}$$

In the Equation (1), reference symbol $A_n$ designates an SINR determined by smoothing SINR of an $n^{th}$ frame, and reference symbol $B_n$ designates an actually measured value of an SINR of the $n^{th}$ frame. As represented by Equation (1), reference symbol $A_n$ that is a smoothed SINR is determined from $A_{(n-1)}$ determined in connection with an immediately preceding frame.

When the error detection section 338 has detected an error, the retransmission request selection section 342 selects either the HARQ processing section 350 or the ARQ processing section 370 to be described later, and causes the selected processing section to perform either the HARQ retransmission request or the ARQ retransmission request.

In the present embodiment, when the signal quality determination section 340 determines that the SINR measured by the signal quality measurement section 334 is deteriorated, the retransmission request selection section 342 selects the ARQ processing section. When it is determined that the SINR is not deteriorated, the signal quality determination section selects the HARQ processing section.

The HARQ processing section 350 includes a data storage section 352, an operation mode setting section 354, an HARQ transmission section 356, a PHY payload transmission section 358, the data combining section 360, and a data deletion section 362. In the embodiment, the processing performed by the HARQ processing section 350 is processing in the PHY layer.

The data storage section 352 stores the data, which have been demodulated by the data demodulation section 332, and which have been corrected by the error correction section 336 (only a demodulated frame when there is no necessity for making an error correction).

When the HARQ processing section 350 is selected by the retransmission request selection section 342, the operation mode setting section 354 sets an operation mode of the HARQ processing section 350 to "in the HARQ process" and notifies the ARQ processing section 370 of "in the HARQ process" information showing that effect. The "in the HARQ process" information includes a state showing that the HARQ processing section 350 is selected and a queue number of a queue buffer that data to be retransmitted was stored in the data storage section 352.

After the operation mode setting section 354 has notified the ARQ processing section 370 of the "in the HARQ process" information, the error detection section 338 detects again an error in the retransmission data that have been transmitted by the base station 120 and received by the data receiving section 330. When the retransmission request selection section 342 has selected the ARQ processing section 370, the operation mode of the HARQ processing section 350 to "discarded the HARQ" is set, and the ARQ processing section 370 is notified of "discarded the HARQ" that includes discarded the HARQ and a queue number of a queue buffer that data to retransmitted was stored in the data storage section 352.

Only when the operation mode set by the operation mode setting section 354 is "in the HARQ process," the HARQ transmission section 356 transmits to the base station 120 an HARQ retransmission request (NACK) including a frame identifier of the data from which the error has been detected.

Meanwhile, in the embodiment, when the retransmission request selection section 342 has selected the ARQ processing section 370, the HARQ transmission section 356 transmits an ACK signal to the base station 120.

Thereby, the base station 120 recognizes that an error is not detected by the HARQ processing section 350, namely, and that the retransmission data are normal. Accordingly, the retransmission request is transmitted solely from the ARQ processing section 370, so that the base station 120 come to be able to retransmit only data corresponding to the ARQ retransmission request.

Further, when the error detection section 338 has not detected any error, the HARQ transmission section 356 transmits an ACK signal to the base station 120.

In the embodiment, the data of unit frame are alternately transmitted and received to each other between the base stations 120 by the TDD/OFDMA scheme, so that the HARQ retransmission request (NACK) and the ACK signal are transmitted by utilization of an anchor channel (ANCH) of transmission data to be transmitted to the base station 120. An MCS request (MR: MCS Requirement) likewise set in the anchor channel (ANCH) is an MCS based on normal adaptive modulation.

When the error detection section 338 has not detected an error, the PREY payload transmission section 358 transmits a PREY payload (see Fig. 3) demodulated by the data demodulation section 332 to the ARTY processing section 370. When the error detection section 338 has detected an error, the PHS payload (see Fig. 3) is not transmitted to the ARQ processing section 370.

The data combining section 360 combines the retransmission data included in the frame demodulated by the data demodulation section 332 and the data held in the data storage section 352 to chase combining and transfers a result of chase combining to the error correction section 336.

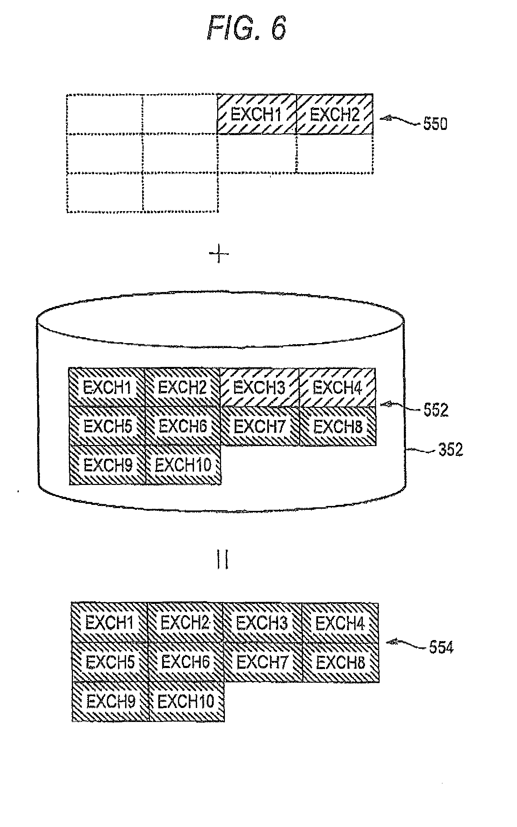

Fig. 6 is a descriptive view for describing operation of chase combining. When an error is detected in the data received and demodulated by the PHS terminal 110, the ARQ retransmission request (NACK) including the error is transmitted to the base station 120, and the frame in which the error is detected is held in the data storage section 352 without being discarded. And, when it is received only the error part as retransmission data 550 from the base station 120, the PHS terminal 110 combines the retransmission data 550 with data 552 held in the data storage section 352 by maximum ratio combining (MRC), and generates demodulation data 554. According to the chase combining technique, the error may efficiently be reduced by increasing the SINR of the received frame by means of MRC of the data.

In the embodiment, although the chase combining is used for combining operation in the data combining section 360, another combining technique, such as IR (Incremental Redundancy) combining using puncturing processing, may be used.

When the error detection section 338 has detected an error and selected the ARQ processing section 370 or when the error detection section 338 has not detected any error, the data deletion section 362 deletes the data stored in the data storage section 352.

The ARQ processing section 370 includes and configured by a PHY payload receiving section 372, a sequence number storage section 374, an operation mode holding section 376, and an ARQ transmission section 378. In the present embodiment, the processing performed by the ARQ processing section 370 is processing in the MAC layer.

The PHY payload receiving section 372 receives a PHY payload (see Fig. 3) transmitted by the PHY payload transmission section 358 and detects a sequence number included in the PHY payload.

The sequence number storage section 374 stores the sequence number and the frame identifier, which are included in the PHY payload received by the PHY payload receiving section 372, with an association.

The operation mode holding section 376 holds the operation mode notified by the operation mode setting section 354; namely, the "in the HARQ process" information or the "discarded the HARQ" information.

When the error detection section 338 has detected an error and selects the ARQ processing section 370, the ARQ transmission section 378 transmits to the base station 120 an ARQ retransmission request (SREJ) including a sequence number of the data in which the error has been detected.

In this case, an ARQ retransmission request is performed by an MCS showing modulation efficiency which is smaller than modulation efficiency shown by the MCS of the data received by the data receiving section 330. The required SINR can be reduced by reducing the modulation efficiency, and the data may be retransmitted with reliability.

Because, when the error detection section 338 has detected an error and when the retransmission request selection section 342 has selected the ARQ processing section 370, the PRY payload transmission section 358 does not transmit a PHS payload. In this case, since the PREY payload receiving section 372 cannot detect any sequence number included in the PHY payload (because of missing of the sequence number), the ARQ transmission section 378 detects a sequence number that cannot have been detected by making a reference to the sequence number storage section 374, and recognize the detection of an error in a lower PHY layer (the HARQ processing section 350).

When the operation mode holding section 376 holds the "in the HARQ process" information, the ARQ transmission section 378 transmits the ACK signal to the base station 120 without transmission of the ARQ retransmission request (SREJ). When the operation mode holding section holds the "discarded the ARQ" information, the ARQ transmission section transmits the ARQ retransmission request (SREJ) to the base station 120.

When the error detection section 338 has not detected any error, the ARQ transmission section 378 transmits the ACK signal to the base station 120.

In the radio communication system 100 that has been described above, the PHS terminal 110 is configuration including the signal quality measurement section 334, the error detection section 338, the signal quality determination section 340, and the retransmission request selection section 342. Accordingly, when an error is detected in the received data that have been transmitted from the base station 120, it is possible to switch between the ARQ processing section 370 and the HARQ processing section 350 according to whether or not signal quality of the received data has become deteriorated. Therefore, a continual selection of the HARQ processing section 350 in spite of deterioration of signal quality is prevented, and the error correction may efficiently be performed.

A radio communication method that implements radio communication by use of the PHS terminal 110 and the base station 120 is now described.

(Radio communication method)

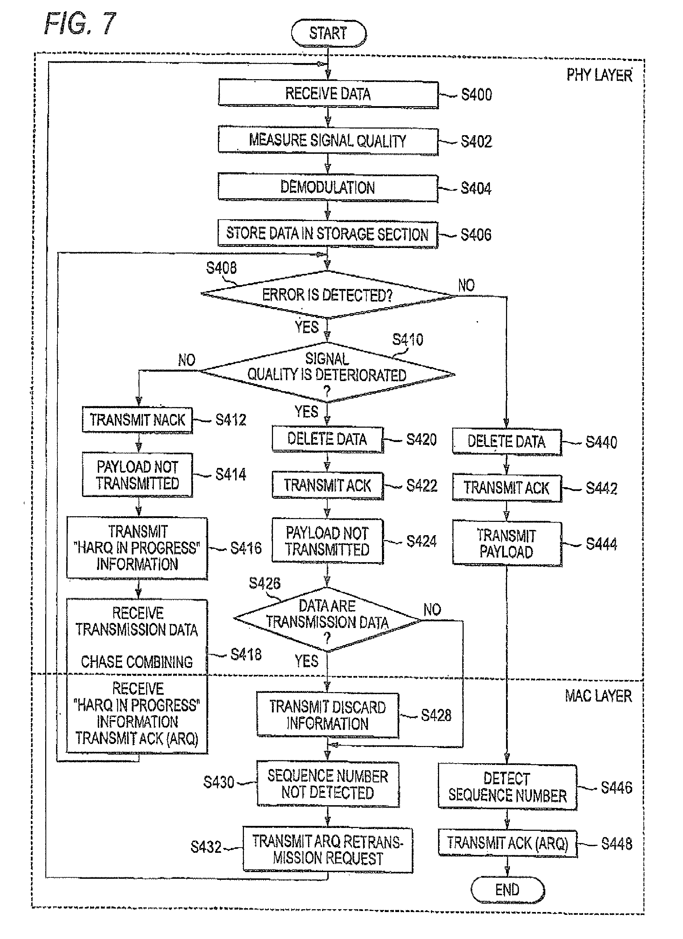

Fig. 7 is a flowchart showing flow or processing of the radio communication method of the present embodiment. Fig. 7 shows processing of the PHS terminal 110 to facilitate understandings.

First, the base station 120 holds, in the transmission data holding section 230, data of unit flame and the MCS identifier, which identifies an MCS used to modulate data, in association with a frame identifier and a sequence number that enable identification of a frame of data. The base station sequentially transmits a frame including data, a frame identifier, and a sequence number by way of the data transmission section 234. The data receiving section 330 of the PHS terminal 110 receives the frame transmitter by the base station 120(a data receiving step: S400). The signal quality measurement section 334 measures an SINR of a frame PRU received in the data receiving step S400 (a signal quality measurement step S402). The data demodulation section 332 demodulates the frame received in the data receiving step S400, and the demodulated frame is transferred to the error correction section 336. When an error is detected, the error correction section 336 performs error correction by means of a cyclic redundancy bit (CRC) (a data demodulation step: S404). The frame demodulated in the data demodulation step S404 or the frame subjected to error correction is stored in the data storage section 352 (a data storage step: S406).

The error detection section 338 detects whether or not an error exists in data included in the frame demodulated in the data demodulation step S404 or the frame subjected to error correction (an error detection step: S408). When an error is detected, the signal quality determination section 340 determines whether or not the SINR measured in the signal quality measurement step S402 becomes deteriorated (a signal quality determination step: S410).

When the SINR has been determined not to become deteriorated in the signal quality determination step S410 and when the ARQ processing section 350 has been selected, the operation mode determination section 354 sets the operation mode of the ARQ processing section 350 to "in the HARQ process." The ARQ transmission section 356 transmits to the base station 120 an ARQ retransmission request (NACK) including a frame identifier of the data in which the error has been detected (an HARQ retransmission request step: S412), and the PHY payload transmission section 358 does not transmit PHY payload to the ARQ processing section 370 (a payload non-transmission step: S414). In the payload non-transmission step S414, the PHY payload transmission section 358 does not transmit PHY payload to the ARQ processing section 370, but the operation mode setting section 354 notifies the ARQ processing section 370 of the "in the HARQ process" information (an HARQ-in-progress notification step S416).

Since the ARQ transmission section 356 did not transmit PHY payload to the ARQ processing section 370 (the payload non-transmission step S414), the ARQ processing section 370 cannot receive the PHY payload, and a missing (a loss) of the sequence number arises. When the missing of the sequence number has occurred, the ARQ transmission section 378 transmits the ARQ retransmission request (SREJ) to the base station 120 in normal times.

However, since the operation mode holding section 376 holds the "in the HARQ process" information (an HARQ-in-progress step S418), the ARQ transmission section 378 transmits not ARQ retransmission request (SREJ) but an ACK (ARQ) signal in response to a sequence number with reference to the sequence number or data corresponding to a queue number included in the received "in the HARQ process" information, (the HARQ-in-progress step: S418) to the base station 120. In this way, the ARQ processing section 370 at the MAC layer may be informed of the sequence number of the missed data, as a result of the PHY payload having not been received, by the queue number transmitted from the ARQ transmission section 356 of the PHY layer.

According to the configuration that the HARQ processing section 350 has been selected, the state of the HARQ processing section is notified to the ARQ processing section 370, the ARQ processing section 370 may confirm with reliability that the HARQ processing section 350 has been selected. Further, since the ARQ processing section 370 holding the "in the HARQ process" information does not transmit the ARQ retransmission request to the base station 120, an overlap of the retransmission request is prevented.

The retransmission request receiving section 236 of the base station 120 receives the HARQ retransmission request (NACK) transmitted from the PHS terminal 110 in the HARQ retransmission request step S412, extracts the frame identifier of the data that are included in the anchor channel (ANCH) in which the error has been detected and an identifier of the error part, and identifies the data and the error area. Subsequently, the HARQ data retransmission section 238 retransmits a frame, which is identified by the frame identifier included in the HARQ retransmission request, and which includes the data held in the transmission data holding section 230 at predetermined frame timing set in the radio communication system 100.

The data receiving section 330 receives the frame including retransmission data transmitted from the base station 120, and the data demodulation section 332 demodulates the received frame (the HARQ-in-progress step: S418). The data combining section 360 chase-combines the retransmission data demodulated in the HARQ process step S418 and the data held in the data storage section 352 in S406 (in the HARQ process step S418), and further performs the error detection step S408.

When the SINR is determined to be deteriorated in the signal quality determination step S410 and when the retransmission request selection section 342 has selected the ARQ processing section 370, the data stored in the data storage section 352 in the data storage step S406 are deleted by the data deletion section 362 (a data deletion step: S420). The HARQ transmission section 356 transmits the ACK signal to the base station 120 (an ACK transmission step S422). The PHY payload transmission section 358 does not transmit the PHY payload demodulated by the data demodulation section 332 to the ARQ processing section 370 (a payload non-transmission step: S424).

The operation mode setting section 354 determines whether or not the data included in the frame demodulated by the data demodulation section 332 are retransmission data (a retransmission data determination step: S426). When the data are retransmission data, the "discarded the ARQ" information is notified to the ARQ processing section 370 (a discarded information transmission step: S428).

When the data included in the demodulated frame are retransmission data, the ARQ transmission section 378 makes a reference to a sequence number corresponding to the queue number included in the "in the HARQ process" information received last time and the sequence number corresponding to the queue number included in the "discarded the ARQ" information.

The ARQ transmission section 378 thereby ascertains discarding of the previous "in the ARQ process" information and transmits to the base station 120 the ARQ retransmission request (SREJ) including the sequence number (an ARQ retransmission request step: S432).

When the data included in the demodulated frame are not retransmission data, the ARQ processing section 360 cannot detect a sequence number because the PHY payload is not transmitted in the payload non-transmission step S424 (a sequence number is lost) (a sequence number non-detection step: S430). The ARQ transmission section 370 transmits the ARQ retransmission request (SREJ) including the sequence number to the base station 120 (an ARQ retransmission request step: S432).

The retransmission request receiving section 236 of the base station 120 receives the ARQ retransmission request (SREJ) transmitted from the PHS terminal 110 in S438 and extracts a sequence number included in the CSCH (Circuit Switching Channel) data channel (CDCH) and identifies the data. Subsequently, the data, which are identified by the sequence number included in the ARQ retransmission request, and which are held in the transmission data holding section 230, are retransmitted at predetermined frame timing defined in the radio communication system 100.

The frame including the retransmission data transmitted from the base station 120 is again received by the data receiving section 330 (the data receiving step: S400).

When the error detection section 338 has not detected any error in the data storage step S406, the data deletion section 362 deletes the data stored in the data storage section 352 in the data storage step S406 (a data deletion step: S440). Moreover, the HARQ transmission section 356 transmits an ACK signal to the base station 120 (an ACK transmission step: S442). Meanwhile, The PHY payload transmission section 358 transmits the PHY payload demodulated by the data demodulation section 332 to the ARQ processing section 370 (a payload transmission step: S444). The ARQ transmission section 378 detects a sequence number from the PHY payload received in the payload receiving step S444 (a sequence number detection step: S448) and transmits an ACK signal to the base station 120 (an ACK (ARQ) transmission step: S448).

Under the radio communication method described above, when an error is detected in received data, it is also possible to switch between ARQ processing section and HARQ processing section according to whether or not signal quality of the received data is deteriorated. Error correction is efficiently performed, and stability of radio communication may be enhanced.

Although the preferred embodiment of the present invention has been described above by reference to the accompanying drawings, it goes without saying that the present invention is not limited to the embodiment. It is obviously to one of ordinary skilled person in the art to be able to conceive various example alterations or modifications within the category described in the claims. Naturally, the alterations and modifications shall be understood to fall within the technical scope of the present invention.

The processing in the steps of the radio communication method described in connection with the present specification does not need to be processed in time series along the sequence provided in the form of a flowchart and can also include a parallel processing or a processing implemented by subroutines.

Although the present invention has been described in detail by reference to the specific embodiment, it is obvious to one of ordinary skilled person in the art that the invention is susceptible to various alterations and modifications without departing the spirit and scope of the invention.

The present patent application is based on Japanese Patent Application No. 2008-085059 filed on March 27, 2008, the entire subject matter of which is incorporated herein by reference.

INDUSTRIAL APPLICABILITY

The present invention may be used for a radio communication system, a radio communication device, and a radio communication method that permit radio communication utilizing an automatic retransmission request (ARQ) and an ARQ.

**Claims**

1. A radio communication system comprising:

> a first radio communication device, and
> a second radio communication device that establishes radio communication with the first radio communication device,
> wherein the second radio communication device comprises:

>> a transmission data holding section that holds a data of unit frame;
>> a data transmission section that sequentially transmits the data;
>> a retransmission request receiving section that receives an HARQ retransmission request or an ARQ retransmission request transmitted from the first radio communication device;
>> an HARQ data retransmission section that retransmits data, which are responsive to the HARQ retransmission request, and which are held in the transmission data holding section, when the retransmission request receiving section has received the HARQ retransmission request; and

>> an ARQ data retransmission section that retransmits data, which are responsive to the ARQ retransmission request, and which are held in the transmission data holding section, when the retransmission request receiving section has received the ARQ retransmission request,

> wherein the first radio communication device comprises:

>> a data receiving section that receives data transmitted from the second radio communication device;
>> a signal quality measurement section that measures signal quality of the received data;
>> a signal quality determination section that determine whether or not the measured signal quality is deteriorated;
>> a data demodulation section that demodulate the received data;
>> an error detection section that detects whether or not an error exists in the demodulated data;
>> an HARQ processing section capable of performing an HARQ retransmission request;
>> an ARQ processing section capable of performing an ARQ retransmission request; and
>> a retransmission request selection section that selects either the HARQ processing section or the ARQ processing section and that causes the selected processing section to make the ARQ retransmission request or the ARQ retransmission request when the error detection section has detected an error, and

> wherein the retransmission request selection section selects the ARQ processing section when the signal quality determination section determines that the measured signal quality is deteriorated and selects the HARQ processing section when the signal quality determination section has determined that the measured signal quality is not deteriorated.

2. The radio communication system according to claim 1,
   wherein the signal quality measurement section measures signal quality of one PRU arbitrarily selected from currently used PRUs, and
   wherein, when the measured signal quality falls below a predetermined value, the signal quality determination, section determines that signal quality is deteriorated,

**3.** The radio communication system according to claim 1,

wherein the signal quality measurement section measures signal qualities of currently used PRUs, and

wherein, when a value determined by averaging the measured signal qualities in a frame falls below a predetermined value, the signal quality determination section determines that the signal quality is deteriorated.

**4.** The radio communication system according to claim 1,

wherein the signal quality measurement section measures signal qualities of currently used PRUs, and

wherein, when a value determined by smoothing the measured signal qualities among the frames falls below a predetermined value, the signal quality determination section determines that the signal quality is deteriorated.

**5.** The radio communication system according to any one or claims 1 through 3,

wherein, when the retransmission request selection section has selected the ARQ processing section, the ARQ processing section performs an ARQ retransmission request by an MCS showing modulation efficiency which is lower than an MCS showed by the received data.

**6.** The radio communication system according to any one of claims 1 through 4,

wherein the ARQ processing section comprises:

an operation mode setting section, which sets an operation mode of the HARQ processing section to "in the HARQ process" or "discarded the HARQ" according to that which one of the HARQ processing section and the ARQ processing section is selected by the retransmission request selection section and notifies the ARQ processing section; and

an HARQ transmission section that transmits the ARQ retransmission request to the second radio communication device when the set operation mode is "in the HARQ process", and

the ARQ processing section comprises:

an operation mode holding section that holds the notified operation mode; and

an ARQ transmission section that transmits the ARQ retransmission request to the second radio communication device when the held operation mode is other than the "in the ARQ process".

**7.** A radio communication device that establishes radio communication with another radio communication device, comprising:

a data receiving section that receives data of unit frame, transmitted from the other radio communication device;

a signal quality measurement section that measures signal quality of the received data;

a signal quality determination section that determines whether or not signal quality or the measured data is deteriorated;

a data demodulation section that demodulates the received data;

an error detection section that detecting whether or not an error exists in the demodulated data;

an HARQ processing section capable of performing an HARQ retransmission request;

an ARQ processing section capable of performing an ARQ retransmission request; and

a retransmission request selection section that selects either the HARQ processing section or the ARQ processing section and that causes the selected processing section to make the HARQ retransmission request or the ARQ retransmission request when the error detection section has detected an error,

wherein the retransmission request selection section selects the ARQ processing section when the signal quality determination section has determined that the measured signal quality is deteriorated and selects the HARQ processing section when the signal quality determination section has determined that the measured signal quality is not deteriorated.

**8.** A method for radio communication using a first radio communication device and a second radio communication device that establishes radio communication with the first radio communication device, the method comprising:

in the second radio communication device,
holding data or unit frame; and
transmitting sequentially the data;
in the first radio communication device,
receiving the transmitted data;
measuring signal quality of the received data;
demodulating the received data;
detecting whether or not an error exists in the demodulated data; determining whether or not the measured signal quality is deteriorated when an error is detected in the demodulated data;
performing an ARQ retransmission request when the measured signal quality is determined to be deteriorated; and
performing an HARQ retransmission request when the measured signal quality is determined not to be deteriorated; and

in the second radio communication device,

receiving the ARQ retransmission request or the ARQ retransmission request,

retransmitting the data that are responsive to the ARQ retransmission request and that are held when received the ARQ retransmission request, and

retransmitting the data that are responsive to the ARQ retransmission request and that are held when received the ARQ retransmission request.

9. The radio communication system according to claim 1,

wherein the first radio communication device is a mobile communication terminal, and

wherein the second radio communication device is a base station.

FIG. 1

# FIG. 2

120

110

BASE STATION

BASE STATION
CONTROL SECTION — 210

BASE STATION MEMORY — 212

214

BASE STATION RADIO COMMUNICATION SECTION

TRANSMISSION DATA
HOLDING SECTION — 230

DATA MODULATION
SECTION — 232

DATA TRANSMISSION
SECTION — 234

RETRANSMISSION REQUEST
RECEIVING SECTION — 236

HARQ DATA RETRANSMISSION
SECTION — 238

ARQ DATA RETRANSMISSION
SECTION — 240

216

BASE STATION WIRED
COMMUNICATION SECTION

130

## FIG. 3

PHY PFRAME

| PHY HEADER | PHY PAYLOAD | CRC |
|---|---|---|

| MAC HEADER | MAC PAYLOAD |
|---|---|

MAC FRAME

# FIG. 4

110

PHS TERMINAL

TERMINAL CONTROL SECTION ~ 310

TERMINAL MEMORY ~ 312

DISPLAY SECTION ~ 314

OPERATION SECTION ~ 316

VOICE INPUT SECTION ~ 318

VOICE OUTPUT SECTION ~ 320

120

TERMINAL RADIO COMMUNICATION SECTION

DATA RECEIVING SECTION ~ 330

DATA DEMODULATION SECTION ~ 332

SIGNAL QUALITY MEASUREMENT SECTION ~ 334

ERROR CORRECTION SECTION ~ 336

ERROR DETECTION SECTION ~ 338

SIGNAL QUALITY DETERMINATION SECTION ~ 340

RETRANSMISSION REQUEST SELECTION SECTION ~ 342

322

HARQ PROCESSING SECTION

DATA STORAGE SECTION ~ 352

OPERATION MODE SETTING SECTION ~ 354

HARQ TRANSMISSION SECTION ~ 356

PHY PAYLOAD TRANSMISSION SECTION ~ 358

DATA COMBINING SECTION ~ 360

DATA DELETION SECTION ~ 362

350

ARQ PROCESSING SECTION

PHY PAYLOAD RECEIVING SECTION ~ 372

SEQUENCE NUMBER STORAGE SECTION ~ 374

OPERATION MODE HOLDING SECTION ~ 376

ARQ TRANSMISSION SECTION ~ 378

370

FIG. 5

# FIG. 6

EP 2 257 099 A1

## FIG. 7

```
                          ( START )
                              │
  ┌───────────────────────────┼──────────────────────────── PHY LAYER
  │                            ▼
  │              ┌──────────────────────────┐
  │              │       RECEIVE DATA       │──── S400
  │              └──────────────────────────┘
  │                            │
  │                            ▼
  │              ┌──────────────────────────┐
  │              │  MEASURE SIGNAL QUALITY   │──── S402
  │              └──────────────────────────┘
  │                            │
  │                            ▼
  │              ┌──────────────────────────┐
  │              │       DEMODULATION        │──── S404
  │              └──────────────────────────┘
  │                            │
  │                            ▼
  │              ┌────────────────────────────────┐
  │              │ STORE DATA IN STORAGE SECTION  │──── S406
  │              └────────────────────────────────┘
  │                            │
  │     S408                   ▼
  │         ◇─────────────────────────────◇       NO
  │         │      ERROR IS DETECTED?      │─────────────────┐
  │         ◇─────────────────────────────◇                 │
  │                         YES │                            │
  │                             ▼   S410                     │
  │    NO   ◇─────────────────────────────◇                 │
  │  ┌──────│   SIGNAL QUALITY IS          │                 │
  │  │      │   DETERIORATED ?             │                 │
  │  │      ◇─────────────────────────────◇                 │
  │  │                      YES │                            │
  │  ▼                          ▼                            ▼
┌──────────────┐      ┌──────────────┐              ┌──────────────┐
│ TRANSMIT NACK│─S412 │  DELETE DATA │─S420         │  DELETE DATA │─S440
└──────────────┘      └──────────────┘              └──────────────┘
       │                     │                             │
       ▼                     ▼                             ▼
┌──────────────┐      ┌──────────────┐              ┌──────────────┐
│ PAYLOAD NOT  │─S414 │ TRANSMIT ACK │─S422         │ TRANSMIT ACK │─S442
│ TRANSMITTED  │      └──────────────┘              └──────────────┘
└──────────────┘             │                             │
       │                     ▼                             ▼
┌──────────────┐      ┌──────────────┐              ┌──────────────┐
│  TRANSMIT    │      │ PAYLOAD NOT  │─S424         │  TRANSMIT    │─S444
│ "HARQ IN     │─S416 │ TRANSMITTED  │              │  PAYLOAD     │
│ PROGRESS"    │      └──────────────┘              └──────────────┘
│ INFORMATION  │             │                             │
└──────────────┘    S426     ▼                             │
       │            ◇─────────────────◇   NO               │
┌──────────────┐    │   DATA ARE       │─────┐             │
│   RECEIVE    │    │ TRANSMISSION DATA│     │             │
│ TRANSMISSION │    │       ?          │     │             │
│    DATA      │    ◇─────────────────◇     │             │
│              │─S418        YES │           │             │
│ CHASE        │                 │           │             │
│ COMBINING    │                 │           │             │
└──────────────┘─ ─ ─ ─ ─ ─ ─ ─ ─│─ ─ ─ ─ ─ ─│─ ─ ─ ─ ─ ─ │ ── MAC LAYER
┌──────────────┐                 ▼           │             │
│   RECEIVE    │          ┌──────────────┐   │             │
│ "HARQ IN     │          │TRANSMIT DISCARD│─S428          │
│ PROGRESS"    │          │ INFORMATION   │  │             │
│ INFORMATION  │          └──────────────┘   │             │
│ TRANSMIT ACK │                 │           │             │
│   (ARQ)      │                 ▼◄──────────┘             │
└──────────────┘          ┌──────────────┐          ┌──────────────┐
              S430────────│SEQUENCE NUMBER│          │   DETECT     │─S446
                          │ NOT DETECTED  │          │SEQUENCE NUMBER│
                          └──────────────┘          └──────────────┘
                                 │                          │
                                 ▼                          ▼
                          ┌──────────────┐          ┌──────────────┐
              S432────────│TRANSMIT ARQ  │          │TRANSMIT ACK  │─S448
                          │ RETRANS-     │          │   (ARQ)      │
                          │MISSION REQUEST│         └──────────────┘
                          └──────────────┘                 │
                                                           ▼
                                                        ( END )
```

<table>
<tr><th colspan="2">INTERNATIONAL SEARCH REPORT</th><th colspan="2">International application No.<br>PCT/JP2009/056397</th></tr>
</table>

**A. CLASSIFICATION OF SUBJECT MATTER**
*H04W28/04*(2009.01)i, *H04L1/00*(2006.01)i, *H04L1/16*(2006.01)i, *H04W28/18*
(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00, H04L1/00, H04L1/16

Documentation searched other than minimum documentation to the extent that such documents are included in the fields searched
   Jitsuyo Shinan Koho      1922-1996   Jitsuyo Shinan Toroku Koho   1996-2009
   Kokai Jitsuyo Shinan Koho   1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-46037 A (Ido Tsushin Shisutemu Kaihatsu Kabushiki Kaisha), 18 February, 1994 (18.02.94), Par. Nos. [0010] to [0011]; Fig. 1 (Family: none) | 1-9 |
| A | WO 2007/000696 A1 (KONINKLIJKE PHILIPS ELECTRONICS), 04 January, 2007 (04.01.07), Page 6, lines 25 to 32; Fig. 12 & JP 2008-547344 A | 1-9 |
| P,A | JP 2008-259026 A (NTT Docomo Inc.), 23 October, 2008 (23.10.08), Full text & WO 2008/126809 A1 | 1-9 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   22 April, 2009 (22.04.09) | Date of mailing of the international search report<br>   12 May, 2009 (12.05.09) |
|---|---|
| Name and mailing address of the ISA/<br>   Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008085059 A